# EUROPÄISCHE PATENTANMELDUNG

(11) **EP 1 583 203 A2**
(43) Veröffentlichungstag der Anmeldung: **05.10.2005**
(21) Anmeldenummer: 05102081.6
(22) Anmeldetag: 16.03.2005
(51) Int. Cl.: H02K 9/12

(54) **Turbogenerator**

(30) Priorität: 31.03.2004 DE 102004016451
(71) Anmelder: Alstom Technology Ltd, 5400 Baden (CH)
(72) Erfinder: Bresson, Michel, 9000, Belfort (FR); Diestel-Feddersen, Lennart, 5200, Brugg (CH); Hard, Jessica, 5405, Baden-Dättwil (CH); Meylan, René, 1400, Yverdon-les-Bains (CH); Novosel, Damir, 5103, Möriken (CH); Roberts, Philip Mark, 5417, Untersiggenthal (CH); Rogala-Poprawa, Anna, 54-210, Wroclaw (PL)

(57) **Zusammenfassung**

Ein Turbogenerator (10) mit Mehrkammerkühlung, umfasst einen um eine Achse drehbar gelagerten Rotor und einen den Rotor konzentrisch umgebenden Stator (12), wobei der Stator (12) mittels Befestigungsvorrichtungen (18) auf einem Grundrahmen (14) befestigt und von mehreren, in axialer Richtung hintereinander angeordneten und voneinander beabstandeten, nach aussen geschlossenen Kaltluftkammern (15) für die gezielte Zufuhr von Kaltluft zum Stator (12) umschlossen ist.

Bei einem solchen Turbogenerator wird eine flexible Ausgestaltung dadurch erreicht, dass die Kaltluftkammern (15) einen integralen Bestandteil des Grundrahmens (14) bilden.

## Beschreibung

### TECHNISCHES GEBIET

Die vorliegende Erfindung bezieht sich auf das Gebiet der Technik von Turbogeneratoren. Sie betrifft einen Turbogenerator gemäss dem Oberbegriff des Anspruchs 1.

### STAND DER TECHNIK

In der Vergangenheit sind verschiedene Konfigurationen für die Anordnung von Kühlluftkammern und Heissluftkammern in Mehrkammer-gekühlten Turbogeneratoren vorgeschlagen worden.

In der EP-A1-0 840 426 ist ein Turbogenerator mit Mehrkammerkühlung offenbart (siehe z.B. die dortige Fig. 1), bei dem die alternierend angeordneten Kaltgaskammern und Heissgaskammern direkt in das Generator- bzw. Maschinengehäuse eingebaut sind, das den Stator vollständig umschliesst.

In der DE-A1-198 43 529 ist ein Turbogenerator mit Mehrkammerkühlung beschrieben, bei dem separat ausgebildete Kaltluftkammern zunächst direkt am Kern des Stators befestigt werden, und die gesamte Anordnung aus Stator und Kaltluftkammern dann auf einen Grundrahmen gesetzt und dort fixiert wird.

Nachteilig ist bei den bekannten Konfigurationen die mangelnde Flexibilität im Aufbau: Grundrahmen, Kammern und Gehäuse bilden eine Einheit, die es nicht erlaubt, spezielle Wünsche des Anwenders bei der Auslegung der Maschinenhülle zu berücksichtigen.

### DARSTELLUNG DER ERFINDUNG

Es ist daher Aufgabe der Erfindung, einen Turbogenerator mit Mehrkammerkühlung zu schaffen, der die Nachteile bekannter Lösungen vermeidet und sich insbesondere dadurch auszeichnet, dass - basierend auf demselben Grundkonzept - je nach Bedarf auf einfache Weise unterschiedliche Umhüllungen des Generators realisiert werden können.

Die Aufgabe wird durch die Gesamtheit der Merkmale des Anspruchs 1 gelöst.
Der Kern der Erfindung besteht darin, die Kaltluftkammern, die zur Einspeisung der Kühlluft in den Rotor dienen, als integralen Bestandteil des Grundrahmens auszubilden. Hierdurch kann für die Kombination aus Kaltluftkammern und Grundrahmen eine standardisierte Konfiguration bereitgestellt werden, die es ermöglicht, den Turbogenerator ohne weiteres nach den Wünschen des Betreibers mit unterschiedlichen Hüllen auszurüsten. Die Abgrenzung des Ventilationssystems erfolgt dabei sowohl durch die Hülle als auch durch den Grundrahmen. Die Vorteile dieser Lösung sind:
- Die wesentlichen Teile des Turbogenerators sind standardisiert.
- Es können unterschiedliche Hüllen für unterschiedliche Zwecke eingesetzt werden.
- Es ergibt sich ein vereinfachter Zugang zum Rücken des Statorkerns zu Inspektionszwecken oder zum Auswechseln von Dichtungen etc..
- Generatoren höherer Leistung können auf einfache Weise in unterschiedlicher Ausgestaltung angeboten werden.

Eine bevorzugte Ausgestaltung der Erfindung ist dadurch gekennzeichnet, dass die Kaltluftkammern entlang einer horizontalen mittleren Ebene jeweils in ein separates Oberteil und ein separates Unterteil aufgeteilt sind, dass das Unterteil ein integraler Bestandteil des Grundrahmens ist, dass das Oberteil mit dem Unterteil verbunden ist und eine geschlossene Kaltluftkammer bildet, und dass das Oberteil und das Unterteil lösbar miteinander verbunden sind. Hierdurch werden die Montage des Generators und der Zugang zum Generator wesentlich vereinfacht.

Bevorzugt sind die Kaltluftkammern als Kästen ausgebildet, welche auf der Unterseite durch den Grundrahmen geschlossen werden. Die Verteilung der Kaltluft auf die verschiedenen Kammern wird dadurch vereinfacht, dass die Kaltluftkammern untereinander durch ausserhalb des Stators in axialer Richtung verlaufende Rohre verbunden sind.

Zwischen den Kaltluftkammern sind vorzugsweise Heissluftkammern ausgebildet, über welche die im Betrieb erwärmte Kühlluft aus dem Stator gesammelt und abgeführt wird. Oberhalb der Kaltluftkammern sind dabei Kühler angeordnet, durch welche die in den Heissluftkammern gesammelte Heissluft strömt und abgekühlt wird. Die in den Kühlern abgekühlte Luft wird durch auf dem Rotor sitzenden Ventilatoren angesaugt und in die Kaltluftkammern eingespeist, wobei die Führung der abgekühlten Luft von den Kühlern zu den Ventilatoren durch eine Hülle erfolgt, welche den Turbogenerator oberhalb des Grundrahmens zumindest abschnittweise umschliesst.

Gemäss einer bevorzugten Weiterbildung der Erfindung ist der Rotor an beiden Enden in zugehörigen Lagern drehbar gelagert, sind die Lager in axialer Richtung ausserhalb der äusseren Kaltluftkammern angeordnet, umschliesst die Hülle die Lager unter Bildung von zugehörigen Lagerräumen mit und ist als schalldämpfende Hülle ausgebildet, wobei vorzugsweise über einem der Lager ein Mittelspannungsraum zur Unterbringung von Mittelspannungseinrichtungen vorgesehen ist, der Mittelspannungsraum von der Hülle mitumfasst wird, und der Mittelspannungsraum oberhalb des am nicht angetriebenen Ende des Rotors sitzenden Lagers angeordnet ist.

Eine alternative Weiterbildung ist dadurch gekennzeichnet, dass der Rotor an beiden Enden in zugehörigen Lagern drehbar gelagert ist, dass die Lager in axialer Richtung ausserhalb der äusseren Kaltluftkammern angeordnet sind, und dass die Hülle in axialer Richtung vor den Lagern endet und als Ventilationshülle ausgebildet ist.

Für die Verbindung der Lagerräume ist es besonders vorteilhaft, ausserhalb des Grundrahmens und der Kaltluftkammern, aber innerhalb der Hülle, in axialer Richtung verlaufende Kanäle auszubilden, welche die Lagerräume miteinander verbinden und für einen Druckausgleich zwischen den Lagerräumen sorgen. Da die Kanäle ausserhalb des Grundrahmens angeordnet sind, brauchen am Grundrahmen keine speziellen, aufwändigen konstruktiven Vorkehrungen getroffen zu werden. Leitungen, die in den Kanälen verlegt sind, sind darüber hinaus vom Inneren der Maschine getrennt. Die Anordnung der Kanäle innerhalb der Hülle bietet einen Schutz gegen Umwelteinflüsse.

Bevorzugt ist an gegenüberliegenden Seiten des Turbogenerators jeweils ein Kanal ausgebildet ist, und sind in den Kanälen Ölleitungen und zur Instrumentierung des Turbogenerators gehörende Leitungen verlegt. Insbesondere verlaufen die Kanäle unmittelbar oberhalb des Grundrahmens.

Aus der DE-A1-43 22 268 ist es beispielsweise bekannt, den Statorkern bzw. Statorblechkörper über mehrere aussen umlaufende Tragringe federnd am Gehäuse des Turbogenerators zu befestigen. Die in den Grundrahmen integrierten Kühlluftkammern gemäss der Erfindung bieten nun die Gelegenheit, die Tragringe an den Kaltluftkammern zu befestigen, so dass auf separate Befestigungsvorrichtungen verzichtet werden kann.

Eine bevorzugte Weiterbildung zeichnet sich dabei dadurch aus, dass die Kältekammern an den Längsseiten des Turbogenerators durch Aussenwände abgeschlossen sind, dass die Tragringe an den Aussenwänden befestigt sind, dass die Kaltluftkammern entlang einer horizontalen mittleren Ebene jeweils in ein separates Oberteil und ein separates Unterteil aufgeteilt sind, dass das Unterteil ein integraler Bestandteil des Grundrahmens ist, dass die Tragringe an den Aussenwänden des Unterteils befestigt sind, dass die Tragringe mit den Aussenwänden der Kaltluftkammern federnd verbunden sind, dass an den Tragringen seitlich vertikale, längliche Federplatten mit ihren Enden festgeschweisst sind, und dass die Mitte der Federplatten über Verbindungsstücke mit den Aussenwänden der Kaltluftkammern fest verbunden sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht einen Turbogenerator mit in den Grundrahmen integrierten Kühlluftkammern ohne Hülle, Rotor und Rotorlager gemäss einem bevorzugten Ausführungsbeispiel der Erfindung;
- Fig. 2: den Turbogenerator aus Fig. 1 mit den abgenommenen oberen Hälften der Kühlluftkammern;
- Fig. 3: den Turbogenerator aus Fig. 1 mit einer alle Räume umhüllenden Schallhülle;
- Fig. 4: den Turbogenerator aus Fig. 1 mit einer auf den Ventilationsteil beschränkten Ventilationshülle;
- Fig. 5: die Konfiguration aus Fig. 3 in einer vereinfachten Darstellung im Längsschnitt mit den eingezeichneten Kühlluftströmen;
- Fig. 6: einen Querschnitt durch den Turbogenerator aus Fig. 1 in Höhe einer der mittleren Kühlluftkammern, die gleichzeitig zur Befestigung der Tragringe des Stators dienen;
- Fig. 7: in der Draufsicht von oben die Befestigung eines Tragrings in einer der Kühlluftkammern;
- Fig. 8: in einer zu Fig. 1 vergleichbaren Darstellung die seitlich in axialer Richtung verlaufenden Kanäle für den Druckausgleich zwischen den Lagerräumen und zur Aufnahme von Leitungen und Kabeln; und
- Fig. 9: in einem Ausschnitt den Querschnitt durch einen der Kanäle aus Fig. 8.

### WEGE ZUR AUSFÜHRUNG DER ERFINDUNG

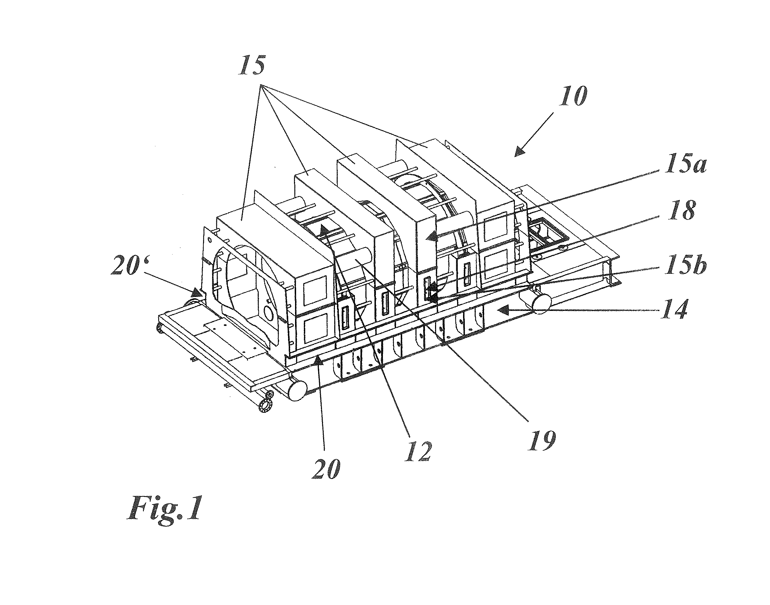

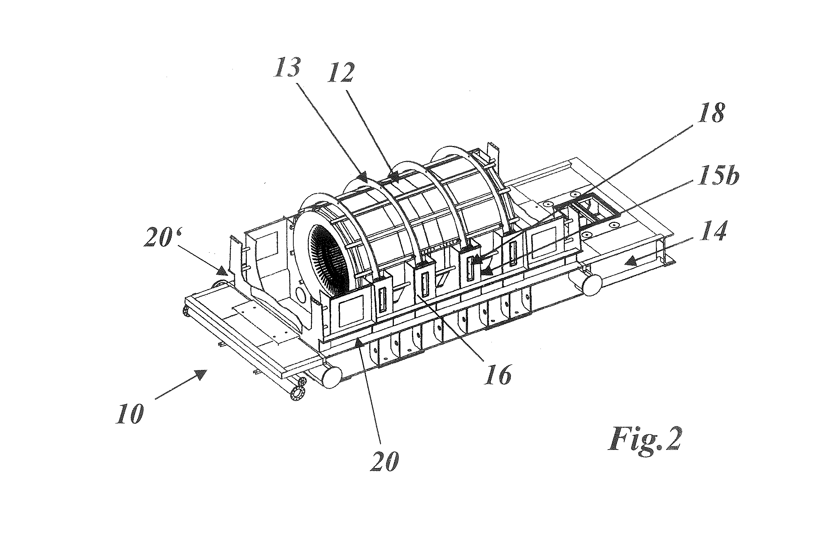

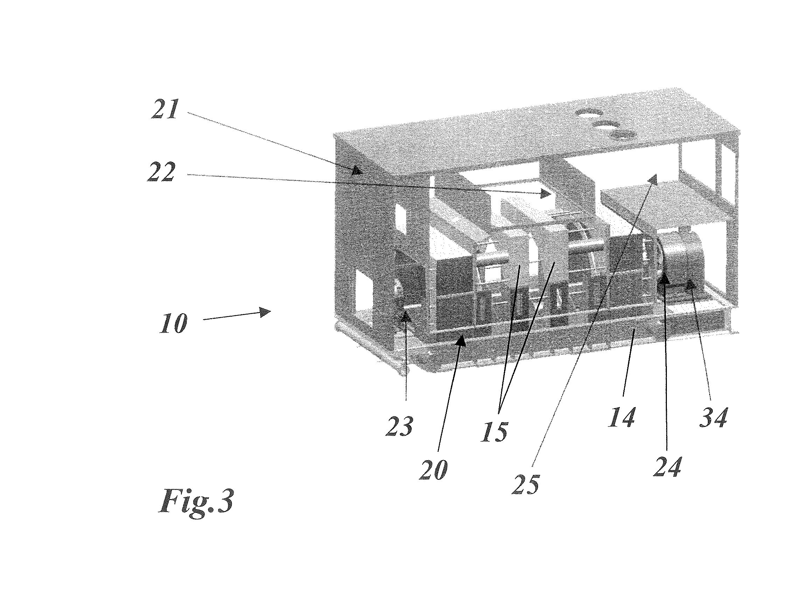

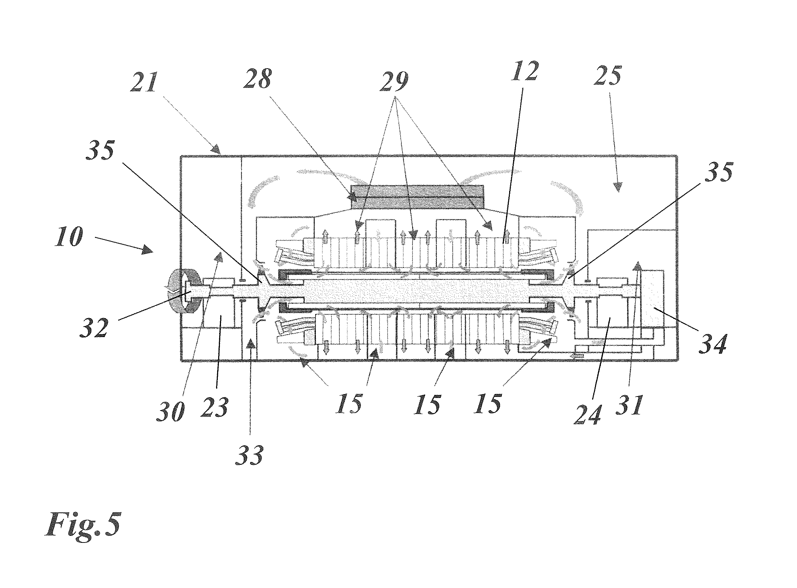

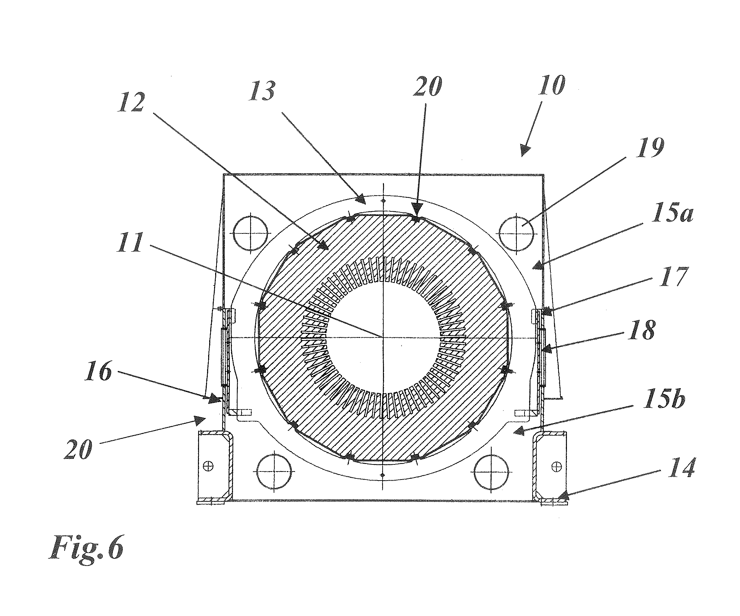

In Fig. 1 ist in einer perspektivischen Seitenansicht ein Turbogenerator mit in den Grundrahmen integrierten Kühlluftkammern gemäss einem bevorzugten Ausführungsbeispiel der Erfindung dargestellt. Der Turbogenerator 10 ist dabei ohne den um die Rotorachse (11 in Fig. 6) drehbaren Rotor, ohne die Rotorlager (23, 24 in Fig. 3) und ohne die äussere Hülle gezeigt. Der Turbogenerator 10 umfasst einen stabilen, rechteckigen, in Richtung der Rotorachse länglichen Grundrahmen 14, auf dem mehrere in Achsenrichtung hintereinander liegende, kastenförmige Kaltluftkammern 15 angeordnet sind. Die Kaltluftkammern 15 umschliessen einen hohlzylindrischen oder polygonförmigen Stator 12 (siehe auch Fig. 2 und Fig. 6), der seinerseits den (nicht dargestellten) Rotor konzentrisch umschliesst. Die voneinander beabstandeten Kaltluftkammern 15 sind untereinander durch mehrere in axialer Richtung verlaufende Rohre 19 verbunden (siehe auch Fig. 6). Es ist aber auch denkbar, die Kaltluftkammern 15 durch im Grundrahmen 14 integrierte Kanäle zu verbinden. Wie aus Fig. 5 ersichtlich ist, wird abgekühlte Luft aus Kühlern 28 über Einlässe 33 durch auf den Enden des Rotors 32 angeordnete Ventilatoren 35 angesaugt und unter anderem in die äusseren beiden Kaltluftkammern 15 gedrückt, von wo sie über die Rohre 19 auch zu den innenliegenden Kaltluftkammern gelangt. In den äusseren Kaltluftkammern umströmt und kühlt die kalte Luft die Wickelköpfe der Statorwicklung, die aus dem Statorblechpaket herausstehen. In den innenliegenden Kaltluftkammern tritt die Kaltluft radial in den Stator 12 ein und strömt zum Luftspalt zwischen Stator 12 und Rotor 32. Zwischen den Kaltluftkammern 15 sind Heissluftkammern 29 ausgebildet, in welchen die radial aus dem Stator 12 wieder austretende, erhitzte Luft gesammelt und zu den Kühlern 28 zurückgeleitet wird.

Gemäss der Erfindung bilden nun die Kaltluftkammern 15 einen integralen Bestandteil des Grundrahmens 14. Wie aus den Fig. 1, 2 und der Darstellung eines Querschnitts durch eine Kaltluftkammer 15 aus Fig. 6 hervorgeht, sind die Kaltluftkammern 15 entlang einer horizontalen mittleren Ebene jeweils in ein separates Oberteil 15a und ein separates Unterteil 15b aufgeteilt. Das Unterteil 15b ist ein integraler Bestandteil des Grundrahmens und wird nach unten zu durch den Grundrahmen 14 abgeschlossen (Fig. 6). Das Oberteil 15a ist mit dem Unterteil 15b vorzugsweise über eine Flanschverbindung lösbar verbunden und bildet zusammen mit dem Unterteil 15b eine geschlossene Kaltluftkammer 15.

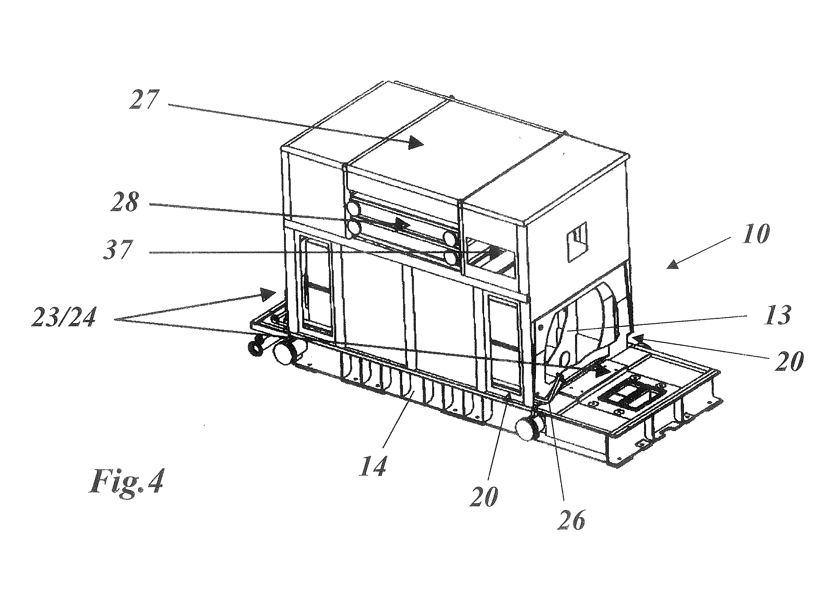

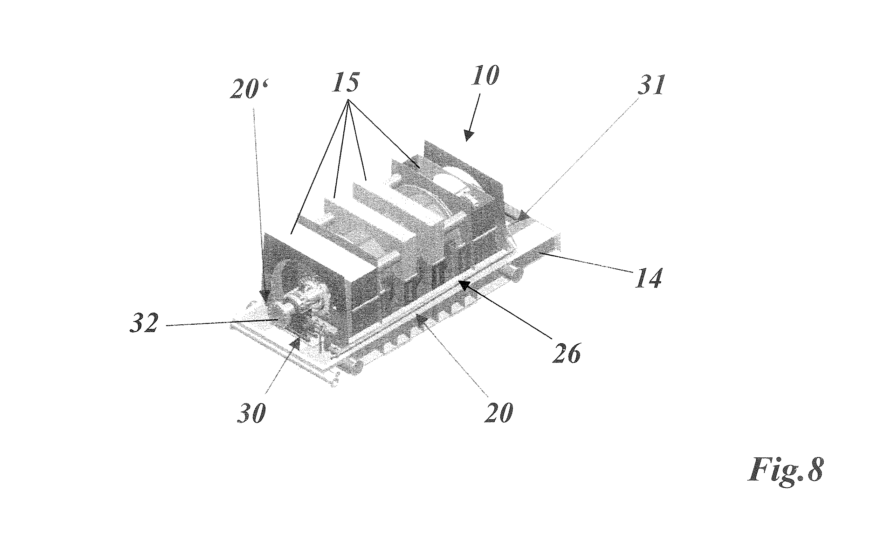

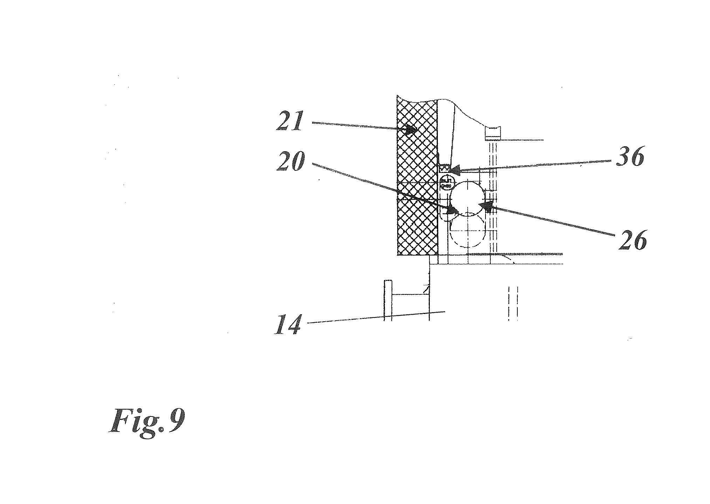

Direkt oberhalb des Grundrahmens 14 sind an den Längsseiten des Turbogenerators 10 aussen zwei gegenüberliegende axiale Kanäle 20, 20' vorgesehen, welche die Bereiche der beiden Rotorlager (23, 24 in Fig. 3) miteinander verbinden. In diesen Kanälen können Ölleitungen (26 in Fig. 4 und 8) für die Ölversorgung der Lager 23, 24 und Signalleitungen und Stromkabel für die Instrumentierung verlegt werden, ohne dass am Grundrahmen 14 selbst zusätzliche konstruktive Massnahmen getroffen werden müssen. Da sich die Kanäle ausserhalb des Grundrahmens 14 befinden, sind sie von der eigentlichen Maschine getrennt, was im Falle von Leckagen in den Ölleitungen verhindert, dass Öl sofort in den Maschinenbereich eindringt. Da die Kanäle 20, 20' nach innen eingezogen sind, werden sie - wie Fig. 4 und Fig. 9 anschaulich zeigen - von der äusseren Hülle 21 bzw. 27 des Turbogenerators 10 nach aussen hin abgedeckt. Dadurch sind die Kanäle 20, 20' und die in ihnen geführten Leitungen und Rohre, wie z.B. die Ölleitung 26, gegen äussere Einflüsse wie Regen oder dgl. geschützt. Zur verbesserten Abdichtung kann gemäss Fig. 9 zwischen Hülle 21 und Kanal 20 eine Dichtung 36 vorgesehen sein.

Die in den Grundrahmen 14 integrierten Kaltluftkammern 15 ergeben gemäss Fig. 1 eine aus Grundrahmen 14 und Kaltluftkammern 15 zusammengesetzte Standardkonfiguration, die auf einfache Weise flexibel mit unterschiedlichen äusseren Hüllen kombiniert werden kann. In den Fig. 3 und 4 sind zwei unterschiedliche Beispiele solcher Hüllen wiedergegeben: Im Beispiel der Fig. 3 (und auch in Fig. 5) ist eine schalldämpfende oder akustische Hülle 21 vorgesehen, die sich über die ganze Länge des Grundrahmens 14 erstreckt und den Turbogenerator 10 oberhalb des Grundrahmens 14 voll umhüllt. Eingeschlossen sind damit auch die beiden Lager des Rotors 32, nämlich das DE-Lager 23 am angetriebenen Ende (Driven End DE) des Rotors, und das NDE-Lager 24 am nicht angetriebenen Ende (Non Driven End NDE) des Rotors. Durch die Hülle 21 werden im Bereich der Lager 23, 24 entsprechende umschlossene Lagerräume 30, 31 (Fig. 5) gebildet, die durch die o.g. Kanäle 20, 20' untereinander druckausgleichend verbunden sind. Es muss daher nur einer dieser Lagerräume 30, 31 mit der Aussenwelt in Verbindung stehen. Im Lagerraum 31 ist auch die Erregereinrichtung 34 des Turbogenerators 10 untergebracht (Fig. 5). Oberhalb des Lagerraums 31 ist innerhalb der Hülle 21 ein Mittelspannungsraum 25 abgetrennt, in dem Mittelspannungseinrichtungen untergebracht werden können. Über den mittleren beiden Kaltluftkammern 15 ist ein Kühlerraum 22 ausgebildet, in dem die Kühler 28 (Fig. 5) untergebracht werden können. Die Kühler 28 können aber auch unten oder seitlich angeordnet sein.

Im Beispiel der Fig. 4 endet die Hülle 27 in axialer Richtung an beiden Enden vor den für die Rotorlager vorgesehenen Abschnitten des Grundrahmens 14. Es werden durch die Hülle 27 daher keine Lagerräume bereitgestellt. Die Hülle 27 dient in diesem Fall ausschliesslich der Umlenkung der durch den Stator zirkulierenden Kühlluft mittels Umlenkräumen 37 und wird daher als Ventilationshülle eingesetzt. Die Kühler 28 sitzen an derselben Stelle wie in Fig. 3 bzw. 5. Auch hier können Kanäle 20, 20' mit der bereits oben beschriebenen Funktion vorgesehen werden.

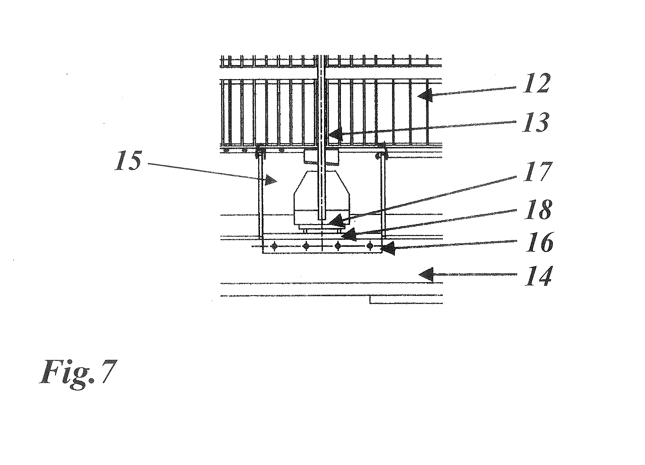

Die in den Grundrahmen 14 integrierten Kaltluftkammern 15 haben neben den bereits beschriebenen Vorteilen bei der flexiblen Anpassung von Hüllen noch einen weiteren wesentlichen Vorteil: Die stabilen vertikalen Aussenwände 16 der Kaltluftkammern 15 an den Längsseiten des Turbogenerators 10 können dazu benutzt werden, den Stator 12 federnd zu lagern (siehe Fig. 2, 6 und 7). In an sich bekannter Weise ist der Statorblechkörper von mehreren, quer zur Achsenrichtung liegenden, in Achsenrichtung mit Abstand hintereinander angeordneten Tragringen 13 umschlossen, in denen der Stator befestigt ist. An den Tragringen sind seitlich vertikal stehende, längliche Federplatten 17 endseitig festgeschweisst. Der freie mittlere Abschnitt der Federplatten ist über angeschweisste Verbindungsstücke 18 an einer äusseren Tragwand befestigt. Im Falle der zwei mittleren Tragringe 13 werden als Tragwände die vertikalen Aussenwände 16 der Kaltluftkammern 15 an den Längsseiten des Turbogenerators 10 verwendet. Auf diese Weise wird eine in den Grundrahmen integrierte federnde Lagerung erreicht, die zusätzlich Tragwände oder Tragpfosten überflüssig macht und nicht auf ein äusseres Maschinengehäuse des Turbogenerators 10 angewiesen ist. Demnach dienen die Tragringe 13, die Federplatten 17, die Verbindungsstücke 18 und die Aussenwände 16 der Kaltluftkammern 15 auch als Befestigungsvorrichtungen, so dass auf separate Befestigungsvorrichtungen verzichtet werden kann.

Insgesamt ergibt sich mit der Erfindung ein Turbogenerator mit einer standardisierten Basiskombination aus Grundrahmen und integralen Kaltluftkammern, die auf flexible Weise mit unterschiedlichen Hüllen versehen werden kann.

### BEZUGSZEICHENLISTE

- 10: Turbogenerator
- 11: Achse
- 12: Stator
- 13: Tragring, Befestigungsvorrichtung
- 14: Grundrahmen
- 15: Kaltluftkammer
- 15a: Oberteil (Kaltluftkammer)
- 15b: Unterteil (Kaltluftkammer)
- 16: Aussenwand (Kaltluftkammer), Befestigungsvorrichtung
- 17: Federplatte, Befestigungsvorrichtung
- 18: Verbindungsstück, Befestigungsvorrichtung
- 19: Rohr
- 20,20': Kanal
- 21,27: Hülle
- 22: Kühlerraum
- 23: DE-Lager (DE = Driven End)
- 24: NDE-Lager (NDE = Non-Driven End)
- 25: Mittelspannungsraum
- 26: Ölleitung
- 28: Kühler
- 29: Heissluftkammer
- 30: Lagerraum (DE-Lager)
- 31: Lagerraum (NDE-Lager)
- 32: Rotor
- 33: Einlass (Ventilator)
- 34: Erreger
- 35: Ventilator
- 36: Dichtung
- 37: Umlenkraum

## Patentansprüche

1. Turbogenerator (10) mit Mehrkammerkühlung, welcher Turbogenerator (10) einen um eine Achse (11) drehbar gelagerten Rotor (32) und einen den Rotor (32) konzentrisch umgebenden Stator (12) umfasst, wobei der Stator (12) mittels Befestigungsvorrichtungen (13, 16, 17, 18) auf einem Grundrahmen (14) befestigt und von mehreren, in axialer Richtung hintereinander angeordneten und voneinander beabstandeten, nach aussen geschlossenen Kaltluftkammern (15) für die gezielte Zufuhr von Kaltluft zum Stator (12) umschlossen ist, **dadurch gekennzeichnet, dass** die Kaltluftkammern (15) einen integralen Bestandteil des Grundrahmens (14) bilden.

2. Turbogenerator nach Anspruch 1, **dadurch gekennzeichnet, dass** die Kaltluftkammern (15) entlang einer horizontalen mittleren Ebene jeweils in ein separates Oberteil (15a) und ein separates Unterteil (15b) aufgeteilt sind, dass das Unterteil (15b) ein integraler Bestandteil des Grundrahmens (14) ist, und dass das Oberteil (15a) mit dem Unterteil (15b) verbunden ist und jeweils eine geschlossene Kaltluftkammer (15) bildet.

3. Turbogenerator nach Anspruch 2, **dadurch gekennzeichnet, dass** das Oberteil (15a) und das Unterteil (15b) lösbar miteinander verbunden sind.

4. Turbogenerator nach einem der Ansprüche 1 bis 3, **dadurch gekennzeichnet, dass** die Kaltluftkammern (15) als Kästen ausgebildet sind, welche auf der Unterseite durch den Grundrahmen (14) geschlossen werden.

5. Turbogenerator nach einem der Ansprüche 1 bis 4, **dadurch gekennzeichnet, dass** die Kaltluftkammern (15) untereinander durch ausserhalb des Stators (12) in axialer Richtung verlaufende Rohre (19) oder durch im Grundrahmen (14) integrierte Kanäle verbunden sind.

6. Turbogenerator nach einem der Ansprüche 1 bis 5, **dadurch gekennzeichnet, dass** zwischen den Kaltluftkammern (15) Heissluftkammern (29) ausgebildet sind, über welche die im Betrieb erwärmte Kühlluft aus dem Stator (12) gesammelt und abgeführt wird.

7. Turbogenerator nach Anspruch 6, **dadurch gekennzeichnet, dass** oberhalb der Kaltluftkammern (15) Kühler (28) angeordnet sind, durch welche die in den Heissluftkammern (29) gesammelte Heissluft strömt und abgekühlt wird, und dass die in den Kühlern (28) abgekühlte Luft durch auf dem Rotor (32) sitzenden Ventilatoren (35) angesaugt und in die Kaltluftkammern (15) eingespeist wird.

8. Turbogenerator nach Anspruch 7, **dadurch gekennzeichnet, dass** die Führung der abgekühlten Luft von den Kühlern (28) zu den Ventilatoren (35) durch eine Hülle (21, 27) erfolgt, welche den Turbogenerator (10) oberhalb des Grundrahmens (14) zumindest abschnittweise umschliesst.

9. Turbogenerator nach Anspruch 8, **dadurch gekennzeichnet, dass** der Rotor (32) an beiden Enden in zugehörigen Lagern (23, 24) drehbar gelagert ist, dass die Lager (23, 24) in axialer Richtung ausserhalb der äusseren Kaltluftkammern (15) angeordnet sind, und dass die Hülle (21) die Lager (23, 24) unter Bildung von zugehörigen Lagerräumen (30, 31) mit umschliesst und als schalldämpfende Hülle ausgebildet ist.

10. Turbogenerator nach Anspruch 9, **dadurch gekennzeichnet, dass** über einem der Lager (23, 24) ein Mittelspannungsraum (25) zur Unterbringung von Mittelspannungseinrichtungen vorgesehen ist, und dass der Mittelspannungsraum (25) von der Hülle (21) mitumfasst wird.

11. Turbogenerator nach Anspruch 10, **dadurch gekennzeichnet, dass** der Mittelspannungsraum (25) oberhalb des am nicht angetriebenen Ende des Rotors (32) sitzenden Lagers (24) angeordnet ist.

12. Turbogenerator nach Anspruch 8, **dadurch gekennzeichnet, dass** der Rotor (32) an beiden Enden in zugehörigen Lagern (23, 24) drehbar gelagert ist, dass die Lager (23, 24) in axialer Richtung ausserhalb der äusseren Kaltluftkammern (15) angeordnet sind, und dass die Hülle (21) in axialer Richtung vor den Lagern (23, 24) endet und als Ventilationshülle ausgebildet ist.

13. Turbogenerator nach Anspruch 9, **dadurch gekennzeichnet, dass** ausserhalb des Grundrahmens (14) und der Kaltluftkammern (15), aber innerhalb der Hülle (21), in axialer Richtung verlaufende Kanäle (20, 20') ausgebildet sind, welche die Lagerräume (30, 31) miteinander verbinden und für einen Druckausgleich zwischen den Lagerräumen (30, 31) sorgen.

14. Turbogenerator nach Anspruch 13, **dadurch gekennzeichnet, dass** an gegenüberliegenden Seiten des Turbogenerators (10) jeweils ein Kanal (20, 20') ausgebildet ist, und dass in den Kanälen (20, 20') Ölleitungen (26) und zur Instrumentierung des Turbogenerators (10) gehörende Leitungen verlegt sind.

15. Turbogenerator nach einem der Ansprüche 13 oder 14, **dadurch gekennzeichnet, dass** die Kanäle (20, 20') unmittelbar oberhalb des Grundrahmens (14) verlaufen.

16. Turbogenerator nach Anspruch 1, **dadurch gekennzeichnet, dass** die Befestigungsvorrichtungen des Stators eine Mehrzahl von Tragringen (13) umfassen, welche an den Kaltluftkammern (15) befestigt sind.

17. Turbogenerator nach Anspruch 16, **dadurch gekennzeichnet, dass** die Kaltluftkammern (15) an den Längsseiten des Turbogenerators (10) durch Aussenwände (16) abgeschlossen sind, und dass die Tragringe (13) an den Aussenwänden (16) befestigt sind.

18. Turbogenerator nach Anspruch 17, **dadurch gekennzeichnet, dass** die Kaltluftkammern (15) entlang einer horizontalen mittleren Ebene jeweils in ein separates Oberteil (15a) und ein separates Unterteil (15b) aufgeteilt sind, dass das Unterteil (15b) ein integraler Bestandteil des Grundrahmens (14) ist, und dass die Tragringe (13) an den Aussenwänden (16) des Unterteils (15b) befestigt sind.

19. Turbogenerator nach Anspruch 17 oder 18, **dadurch gekennzeichnet, dass** die Tragringe (13) mit den Aussenwänden (16) der Kaltluftkammern (15) federnd verbunden sind.

20. Turbogenerator nach Anspruch 19, **dadurch gekennzeichnet, dass** an den Tragringen (13) seitlich vertikale, längliche Federplatten (17) mit ihren Enden festgeschweisst sind, und dass die Mitte der Federplatten (17) über Verbindungsstücke (18) mit den Aussenwänden (16) der Kaltluftkammern (15) fest verbunden sind.
